Europäisches Patentamt

European Patent Office

Office européen des brevets

(19)

(11) Veröffentlichungsnummer: **0 204 082**
**B1**

(12) # EUROPÄISCHE PATENTSCHRIFT

(45) Veröffentlichungstag der Patentschrift:
**14.06.89**

(51) Int. Cl.⁴: **H02B 13/02**

(21) Anmeldenummer: **86103321.5**

(22) Anmeldetag: **12.03.86**

(54) Gussgehäuse für Mittelspannungs-Schaltanlage.

(30) Priorität: **20.05.85 CH 2138/85**

(43) Veröffentlichungstag der Anmeldung:
**10.12.86 Patentblatt 86/50**

(45) Bekanntmachung des Hinweises auf die Patenterteilung:
**14.06.89 Patentblatt 89/24**

(84) Benannte Vertragsstaaten:
**CH DE FR GB IT LI SE**

(56) Entgegenhaltungen:
**DE-A- 3 109 669**
**DE-A- 3 235 800**

(73) Patentinhaber: **BBC Brown Boveri AG, Haselstrasse,
CH-5401 Baden(CH)**

(72) Erfinder: **Munzinger, Karl, Talackerstrasse 12,
CH-8156 Oberhasli(CH)**
Erfinder: **Peter, Jörg, Moritz Meyerweg 11,
CH-8180 Bülach(CH)**
Erfinder: **Plessl, Andreas, Dr., Loorenstrasse 20d,
CH-5443 Niederrohrdorf(CH)**
Erfinder: **Poole, Denis, Parkweg 644,
CH-5314 Kleindöttingen(CH)**
Erfinder: **Vit, Jean Georg, Winterhaldenstrasse 49,
CH-5300 Turgi(CH)**

## Beschreibung

Bei der Erfindung wird ausgegangen von einem Gussgehäuse gemäss dem ersten Teil des Anspruchs 1.

Ein solches Gussgehäuse ist etwa aus der DE-OS 32 35 800 bekannt. Das zum Tragen spannungsführender Komponenten in Mittelspannungs-Schaltanlagen vorgesehene, bekannte Gussgehäuse ist im wesentlichen quaderförmig ausgebildet und wesit in Front- und Rückwand sowie an Deck- und Bodenfläche verschliessbare Flanschöffnungen zum Durchführen von Verbindungsleitern der spannungsführenden Komponenten auf. Ein solches Gussgehäuse ist an die Bauweise der Mittelspannungs-Schaltanlage angepasst. Eine Umrüstung oder eine Erweiterung dieser Anlage ist daher nicht ohne weiteres möglich.

Die Erfindung wie sie in den Ansprüchen gekennzeichnet ist, löst die Aufgabe, ein Gussgehäuse der gattungsgemässen Art anzugeben, welches ohne wesentliche Aenderungen bei allen für eine vorgegebene Anlagenspannung möglichen Bauweisen von Schaltanlagen Verwendung finden kann.

Diese Aufgabe wird durch die im kennzeichnenden Teil des Anspruchs 1 angegebenen Merkmalen gelöst. Das erfindungsgemässe Gussgehäuse zeichnet sich dadurch aus, dass es in grossen Serien und daher preiswert herzustellen ist, und für alle wichtigen vom Markt geforderten Bauweisen von Mittelspannungs-Schaltanlagen verwendet werden kann. Darüber hinaus kann eine bereits bestehende und ein solches Gussgehäuse enthaltende Mittelspannungs-Schaltanlage problemlos umgebaut und erweitert werden.

Vorteilhafte Weiterbildungen der Erfindung sind in den abhängigen Ansprüchen 2 bis 10 angegeben.

Das Gussgehäuse nach der Erfindung wird nachfolgend anhand eines in der Zeichnung dargestellten Ausführungsbeispiels näher erläutert.

Hierbei zeigt:

Fig. 1 eine fontseitige Aufsicht auf das längs der Linie I-I von Fig. 3 geschnittene Ausführungsbeispiel des erfindungsgemässen Gussgehäuses,

Fig 2 eine Aufsicht auf einen Schnitt längs der Linie II-II von Fig. 1 durch das Ausführungsbeispiel,

Fig. 3 eine Aufsicht von oben auf das längs der Linie III-III von Fig. 1 geschnittene Ausführungsbeispiel,

Fig. 4 eine Aufsicht auf einen Schnitt längs einer Phase durch eine mehrphasige Mittelspannungs-Schaltanlage, in der das Ausführungsbeispiel des erfindungsgemässen Gussgehäuses nach den Figuren 1 bis 3 verwendet wird, und

Fig. 5 eine Aufsicht auf einen Schnitt längs einer Phase durch eine weitere mehrphasige Mittelspannungs-Schaltanlage, in der das Ausführungsbeispiel des erfindungsgemässen Gussgehäuses nach den Figuren 1 bis 3 verwendet wird.

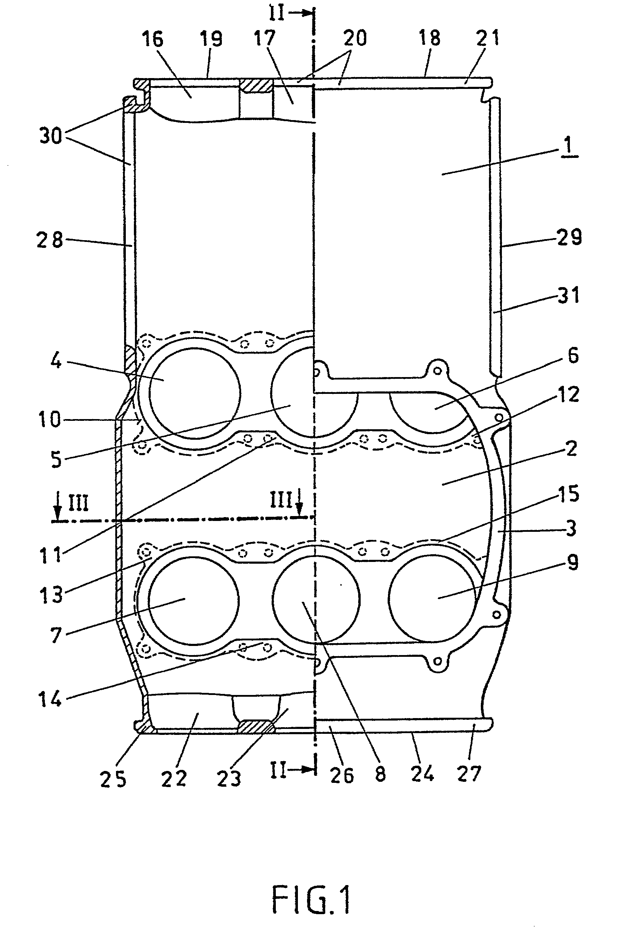

Das in den Fig. 1 bis 3 dargestellte Gussgehäuse 1 ist vorzugsweise aus Metall, wie etwa Aluminium oder Stahl hergestellt, und ist im wesentlichen quaderförmig ausgebildet. In seiner in der rechten Hälfte von Fig. 1 ersichtlichen Frontseite ist eine vergleichsweise grosse Oeffnung 2 von annähernd ovaler Form zu erkennen, welche von einem auf der Gehäusewand befindlichen Flansch 3 begrenzt ist. In der Rückseite des Gussgehäuses 1 sind zwei Reihen von nebeneinander angeordneten, vergleichsweise kleinen kreisförmigen Oeffnungen 4, 5, 6 bzw. 7, 8 , 9 vorgesehen, welche von nicht sichtbaren und daher gestrichelt dargestellten Flanschen 10, 11, 12 bzw. 13, 14, 15, begrenzt sind. Je zwei dieser Oeffnungen, z.B. 4, 7 oder 5, 8, sind übereinander angeordnet. In der Deckfläche des Gussgehäuses 1 sind drei weitere vergleichsweise kleine kreisförmige Oeffnungen 16, 17, 18 vorgesehen, welche von Flanschen 19, 20, 21 begrenzt sind. Auch in der Bodenfläche sind drei vergleichsweise kleine kreisförmige Oeffnungen 22, 23, 24 vorgesehen, welche von Flanschen 25, 26, 27 begrenzt sind. Ferner sind in den Seitenwänden zwei vergleichsweise grosse Oeffnungen 28, 29 vorgesehen, welche von Flanschen 30 oder 31 begrenzt sind.

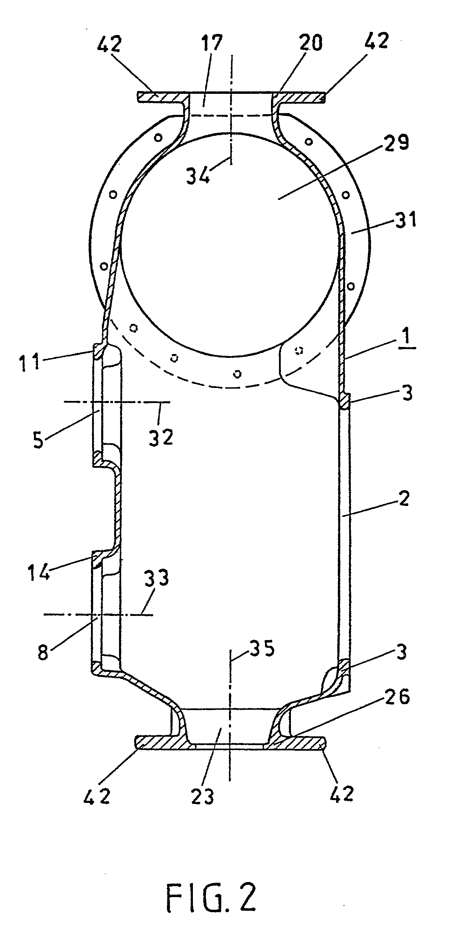

Wie aus Fig. 2 ersichtlich ist, weisen je vier der auf der Rückwand sowie der Deck- und der Bodenfläche befindliche Oeffnungen, z.B. 5, 8, 17, 23, durch diese Oeffnungen erstreckte Mittelachsen, z.B. 32, 33, 34, 35 auf, welche in einer gemeinsamen Ebene liegen und jeweils senkrecht auf derjenigen Flanschebene stehen, welche von dem der betreffenden Oeffnung, z.B. 5, zugeordneten Flansch, z.B. 11, gebildet ist. Hierbei sind die beiden Mittelachsen 32, 33 der in der Rückwand befindlichen Oeffnungen 5, 8 parallel zueinander ausgerichtet und liegen die beiden in der Deck- bzw. in der Bodenfläche befindlichen Oeffnungen 17 bzw. 23 einander diametral gegenüber, so dass deren Mittelachsen 34 und 35 beiden Oeffnungen 17 bzw. 23 gemeinsam sind. Die vier vorstehend erwähnten Oeffnungen 5, 8, 17, 23 sind im allgemeinen einer Phase einer mehrphasigen Mittelspannungs-Schaltanlage zugeordnet.

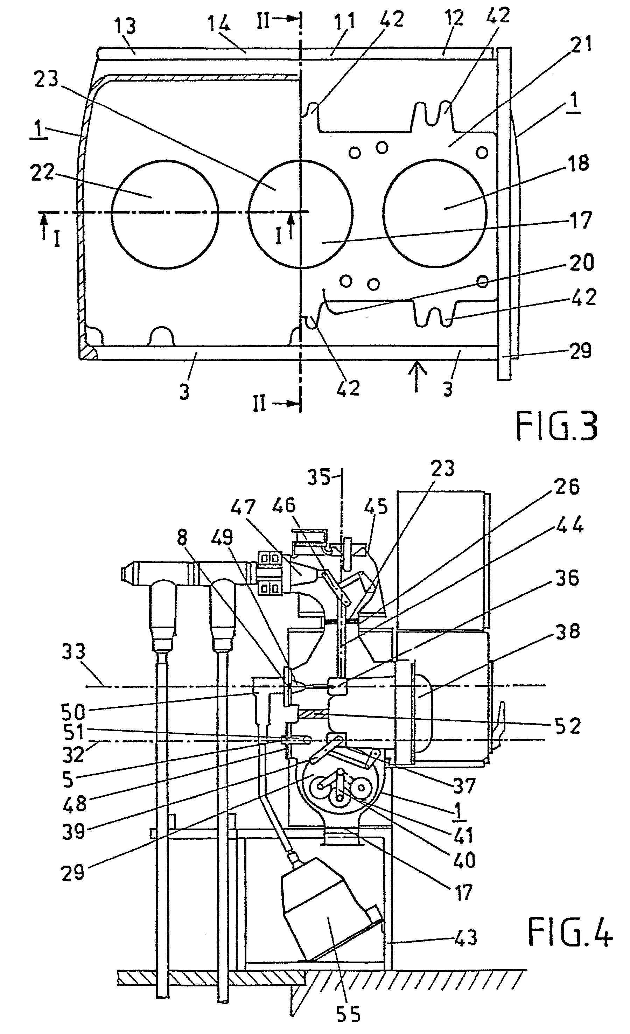

Aus Fig. 4 ist ersichtlich, wie das vorstehend beschriebene Gussgehäuse 1 als zentrales Trägerelement für eine Ausführungsform der Mittelspannungs-Schaltanlage Verwendung finden kann. Im Gussgehäuse 1 befinden sich die ins Innere dieses Gehäuses eingeführten Stromanschlüsse 36, 37 eines auf dem Flansch 3 befestigten und die Oeffnung 2 verschliessenden 3-phasigen Leistungs- oder Lastschalters 38, ein Trennschalter 39 mit drei Betriebsstellungen, dessen beweglicher Kontakt am Stromanschluss 37 abgestützt ist, sowie eine 3-phasige Sammelschiene 40, welche einen feststehenden Kontakt des Trennschalters 39 trägt, und deren Phasenleiter auf (die Oeffnungen 28, 29, verschliessende)Schottungsisolatoren 41 abgestützt aus dem Gussgehäuse 1 herausgeführt sind.

Das Gussgehäuse 1 ist gegenüber seiner Darstellung in den Fig. 1 bis 3 um 180° gedreht und ist mittels Befestigungsteilen 42 (Fig. 2, 3), welche an den Flanschen 19 bis 24 angebracht sind, auf ein Traggestell 43 aufgeschraubt. Die Oeffnung 17 wird bereits beim Giessen des Gussgehäuses 1 hergestellt und ist durch ein als Berstscheibe ausgebildetes Ueberdruckventil verschlossen, wohingegen durch die Oeffnung 23 ein in isolierender Weise am Gussgehäuse 1 abgestützter Stab 44 aus leitendem Material geführt ist. Im Gegensatz zur Oeffnung 17 wird die Oeffnung 23 nicht beim Giessen des Gussgehäuses 1 hergestellt, sondern durch Ausbrechen einer beim Giessen entstandenen gasdichten Wand. Das untere Ende des Stabes 44 ist in ein in Richtung der Mittelachse 35 ausgerichtetes Kupplungsteil des Stromanschlusses 36 gesteckt. Das obere Ende des Stabes 44 ist in ein Gehäuse 45 geführt, welches auf dem die Oeffnung 23 begrenzenden Flansch 26 in gasdichter Weise aufgesetzt ist, und trägt dort den beweglichen Kontakt eines im Gehäuse 45 befindlichen weiteren Trennschalter 46. Ein feststehender Kontakt des Trennschalters 46 ist auf dem Leiter einer ins Gehäuse 45 ragenden Durchführung 47 zu einem nicht bezeichneten Kabelanschluss angebracht.

Die in der Rückseite des Gussgehäuses 1 befindlichen Oeffnungen 5 bzw. 8 sind mittels eines Deckels 48 bzw. einer gasdichten Durchführung 49 zu einem Kabelsteckanschluss 50 eines Spannungswandlers 55 abgeschlossen. Der Deckel 48 enthält eine transparente Platte aus elektrisch isolierendem Material, durch welche ein in die Platte eingelassener und auf Erdpotential ebfindlicher Kontakt 51 aus dem Inneren des Gussgehäuses 1 herausgeführt ist. Der bewegliche Kontakt des Trennschalters 39 kann mit diesem Kontakt 51 in Eingriff gebracht werden. Durch die in der Oeffnung 5 vorgesehene transparente Platte können zugleich die drei Betriebsstellungen des Trennschalters 39, d.h. seine Trennstellung bzw. der Eingriff seines beweglichen Kontaktes mit dem auf der Sammelschiene 40 befindlichen feststehenden Kontakt bzw. mit dem auf Erdpotential befindlichen Kontakt 51, beobachtet werden. Der Leiter der Durchführung 49 ist längs der Mittelachse 33 durch die Oeffnung 8 geführt und ist auf ein in Richtung dieser Mittelachse ausgerichtetes Kupplungsteil des Stromanschlusses 36 aufgesteckt. Entsprechend dem Stromanschluss 36 weist auch der Stromanschluss 37 des Leistungs- oder Lastschalters 38 ein (in der Fig. 4 ebenfalls nicht bezeichnetes) Kupplungsteil auf, welches längs der Mittelachse 32 der Oeffnung 5 ausgerichtet ist.

Durch die Ausrichtung der Kupplungsteile auf den Stromanschlüssen 36 bzw. 37 und die entsprechende Anordnung der Oeffnungen, insbesondere auf der Rückwand, der Deck-und der Bodenfläche, ist es möglich, beliebige zusätzliche Anlagenkomponenten, wie Stromwandler, Spannungswandler, Ableiter, Trennschalter, Kabelsteckanschlüsse oder Leitungen zu weiteren Sammelschienen, je nach Anforderungen an die Mittelspannungs-Schaltanlge an das Gussgehäuse 1 über Durchführungen anzuflanschen.

Ueblicherweise sind drei nebeneinander angeordnete Oeffnungen, z.B. 16, 17, 18, zur Durchführung je eines von drei Phasenleitern vorhanden. Hierbei nicht benötigte Oeffnungen, z.B. die Oeffnung 16 und 18 beim Ausführungsbeispiel gemäss Fig. 4, werden mit Deckeln gasdicht verschlossen. Solche Deckel können Anschlüsse zum Einfüllen von Isoliergas, Messaufnehmer zur Anlagenüberwachung, wie für Dichtewächter oder Lichtbogen-Schutzeinrichtungen, sowie Feuchtigkeitsabsorber tragen.

Im allgemeinen enthält das Gussgehäuse 1 lediglich einen mit einem Isoliergas von 1 bis 2 bar Druck gefüllten Innenraum, jedoch ist es wie aus Fig. 4 ersichtlich ist, ohne weiteres möglich, den Innenraum in zwei gegeneinander abgeschottete Räume zu unterteilen. Dies kann in einfacher Weise durch eine Trennwand 52 bewirkt werden, welche auf der Innenseite der Rückwand zwischen den beiden übereinander angeordneten Oeffnungen, z.B. 5 und 8, angebracht ist. Diese Trennwand ist im wesentlichen parallel zu den Mittelachsen 32, 33 dieser Oeffnungen ausgerichtet und stützt sich an dem Leistungs- oder Lastschalter 38 nach dessen Einbau in dichtender Weise ab. Hierdurch ist es möglich, beide Räume unabhängig voneinander zu öffnen und etwa ohne Freischalten der Sammelschiene 40 im den Stromanschluss 36 enthaltenden Raum Eingriffe vorzunehmen.

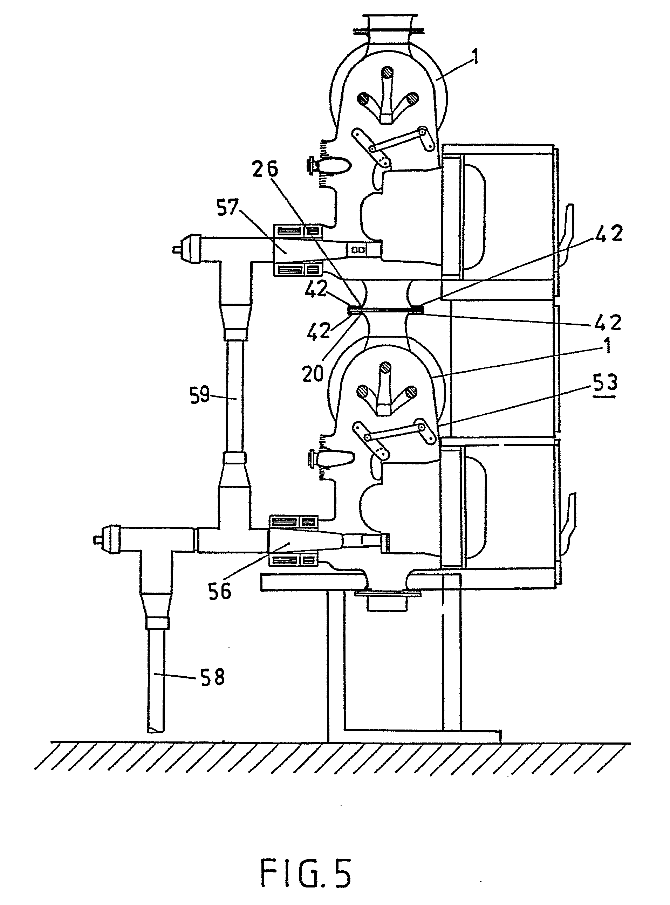

Wie aus Fig. 5 ersichtlich ist, können zwei Gussgehäuse 1 mittels der an den Flanschen 19, 20, 21 bzw. 25, 26, 27 befindlichen Befestigungsteile 42 ohne weiteres auch zu einer doppelstöckigen Anlage zusammengeflanscht werden. Sind hierbei, wie in Fig. 5 dargestellt ist, ein zum unteren Gussgehäuse 1 gehörender Kabelsteckanschluss 56 und ein zum oberen Gussgehäuse 1 gehörender Kabelsteckanschluss 57 miteinander über ein Kabel 59 und mit einem gemeinsamen Abgangskabel 58 verbunden, so lässt sich in einfacher Weise ein Duplex-Feld realisieren. Andererseits kann aber auch an jedes der beiden Gussgehäuse 1 ein separates Abgangskabel angeschlossen sein. Bei Fehlen des verbindenden Kabels 59 ergibt sich dann in einfacher Weise ein doppelstöckige Einfachsammelschienen-Anlage.

## Patentansprüche

1. Isoliergasgefülltes und im wesentlichen quaderförmig ausgebildetes Gussgehäuse (1) für eine mehrphasige Mittelspannungs-Schaltanlage zum Tragen von spannungsführenden Anlagenkomponenten, wie einem Leistungs-oder Lastschalter (38), einer Sammelschiene (40), einem Trenn (39)- und einem Erdungsschalter (51), und Durchführungen (z.B. 49), welches Gussgehäuse (1) zumindest in einer Front- und einer Rückwand sowie in einer Boden- und einer Deckfläche verschliessbare und von einem Flansch (z.B. 3) begrenzte Oeffnungen (z.B. 2) aufweist, dadurch gekennzeichnet, dass das Gehäuse (1) in der Frontwand und in den an die Frontwand anschliessenden und einander diametral gegenüberliegenden beiden Seitenwänden jeweils eine von einem Flansch (3, 30, 31) begrenzte grosse Oeffnung (2, 28, 29) und in der Rückwand sowie in der Deck- und in der Bodenfläche pro Phase jeweils mindestens eine von 4 vergleichsweise kleinen Oeffnungen (z.B. 5, 8, 17, 23) aufweist, welche jeweils von einem von 4 einander entsprechenden Flanschen (z.B. 11, 14, 20, 26) begrenzt sind und deren durch diese Oeffnungen (z.B. 5, 8, 17, 23) erstreckte Mittelachsen (z.B. 32, 33, 34, 35) in einer Ebene liegen, dass durch die in der Frontwandbefindliche Oeffnung (2) die Stromanschlüsse (36, 37) der phasen des Leistungs- oder Lastschalters (38) ins Innere des Gussgehäuses (1) bringbar sind, dass durch die in den Seitenwänden befindlichen Oeffnungen (28, 29) jeweils die Phasenleiter der Sammelschiene (40) führbar sind, und dass durch jede (z.B. 5) der übrigen Oeffnungen (z.B. 5, 8, 17, 23) entweder ein längs der Mittelachse (z.B. 32) dieser Oeffnung (z.B. 5) ausgerichteter Durchführungsleiter zu einer weiteren spannungsführenden Anlagenkomponente führbar ist oder durch einen Deckel abschliessbar oder eine Gusswand abgeschlossen ist.

2. Gussgehäuse nach Anspruch 1, dadurch gekennzeichnet, dass in der Rückwand pro Phase zwei übereinander angeordnete Oeffnungen (z.B. 5, 8) mit zueinander parallel ins Innere des Gussgehäuses (1) gerichteten Mittelachsen (z.B. 32, 33) vorgesehen sind, längs denen bei eingebautem Leistungs- oder Lastschalter (38) an den Stromanschlüssen (36, 37) des Leistungs- oder Lastschalters (38) befindliche erste Kupplungsteile ausgerichtet sind.

3. Gussgehäuse nach Anspruch 2, dadurch gekennzeichnet, dass auf der Innenseite der Rückwand zwischen den beiden Oeffnungen (z.B. 5, 8) jeder Phase eine im wesentlichen parallel zu den Mittelachsen (z.B. 32, 33) dieser Oeffnungen (z.B. 5, 8) ausgerichtete Trennwand (52) vorgesehen ist, welche nach Einbau des Leistungs- oder Lastschalters (38) das Gussgehäuse in zwei voneinander abgeschottete Räume unterteilt.

4. Gussgehäuse nach Anspruch 1, dadurch gekennzeichnet, dass in der Bodenfläche eine Oeffnung (z.B. 23) mit einer ins Innere des Gussgehäuses (1) gerichteten Mittelachse (z.B. 35) vorgesehen sind, längs welcher bei eingebautem Leistungs- oder Lastschalter (1) ein zweites Kupplungsteil ausgerichtet ist, das an einem der Bodenfläche zugewandten Stromanschluss (z.B. 36) des Leistungs- oder Lastschalters (38) angebracht ist.

5. Gussgehäuse nach Anspruch 1, dadurch gekennzeichnet, dass in der Deck- und in der Bodenfläche pro Phase je eine Oeffnung (z.B. 17, 23) vorgesehen ist, welche Oeffnungen eine gemeinsame Mittelachse (z.B. 34, 35) aufweisen.

6. Gussgehäuse nach einem der Ansprüche 1 bis 5, dadurch gekennzeichnet, dass die in der Bodenfläche vorgesehenen Oeffnungen (22, 23, 24) jeweils durch eine bei der Gehäuseherstellung gegossene gasdichte Wand verschlossen sind.

7. Gussgehäuse nach einem der Ansprüche 1 bis 6, dadurch gekennzeichnet, dass der Deckel (48) eine transparente Platte aus elektrisch isolierendem Material enthält, durch welche ein in die Platte eingelassener geerdeter Kontakt (51) aus dem Inneren des Gussgehäuses (1) herausgeführt ist.

8. Gussgehäuse nach einem der Ansprüche 1 bis 6, dadurch gekennzeichnet, dass der Deckel als Anschluss zum Einfüllen des Isoliergases ausgebildet ist.

9. Gussgehäuse nach einem der Ansprüche 1 bis 6, dadurch gekennzeichnet, dass der Deckel einen Messwertaufnehmer für einen Dichtewächter oder eine Lichtbogen-Schutzeinrichtung trägt.

10. Gussgehäuse nach einem der Ansprüche 1 bis 6, dadurch gekennzeichnet, dass der Deckel einen Feuchtigkeitsabsorber trägt.

## Claims

1. Insulating-gas filled and substantially cuboid-shape designed cast housing (1) for a multi-phase mediumvoltage switchgear for the carrying of live switchgear components, such as a power switch or circuit-breaker (38), a busbar (40), a disconnecting switch (39) and a grounding switch (51), and bushings (for example 49), which cast housing (1) has at least in a front and a back wall as well as in a bottom and a top surface openings (for example 2) which are closable and bounded by a flange (for example 3), characterized in that the housing (1) has in the front wall and in the two side walls adjoining the front wall and diametrically opposed to each other in each case a large opening (2, 28, 29) bounded by a flange (3, 30, 31) and in the rear wall as well as in the top and bottom surfaces per phase in each case at least one of 4 comparatively small openings (for example 5, 8, 17, 23), which in each case are bounded by one of 4 flanges (for example 11, 14, 20, 26), which correspond to one another, and the midaxes (for example 32, 33, 34, 35) of said openings (for example 5, 8, 17, 23), through which they extend, lie in a plane, that the supply terminals (36, 37) of the phases of the power switch or circuit-breaker (38) can be brought through the opening (2) located in the front wall into the interior of the cast housing (1), that in each case the phase conductors of the busbar (40) can be led through the openings (28, 29) located in the side walls, and that either a bushing conductor aligned along the mid-axis (for example 32) of this opening (for example 5) can be led through each (for example 5) of the remaining openings (for example 5, 8, 17, 23) to a further live switchgear component or can be closed off by a cover or is closed off by a cast wall.

2. Cast housing according to Claim 1, characterized in that in the rear wall there are provided per phase two openings (for example 5, 8) arranged one above the other with mid-axes (for example 32, 33) directed parallel to each other into the interior of the cast housing (1), along which mid-axes are aligned, when there is installed power switch or circuit-breaker (38), first coupling elements located on the supply terminals (36, 37) of the power switch or circuit-breaker (38).

3. Cast housing according to Claim 2, characterized in that on the inside of the rear wall between the two openings (for example 5, 8) there is provided for each phase a partition wall (52) aligned substantially parallel to the mid-axes (for example 32, 33) of these openings (for example 5, 8) which partition wall, after installation of the power switch or circuit-breaker (38), subdivides the cast housing into two mutually segregated spaces.

4. Cast housing according to Claim 1, characterized in that in the bottom surface there is provided an opening (for example 23) with a mid-axis (for example 35) directed into the interior of the cast housing (1), along which mid-axis is aligned, when there is installed power switch or circuit-breaker (1), a second coupling element which is attached to a supply terminal (for example 36), facing the bottom surface, of the power switch or circuit-breaker (38).

5. Cast housing according to Claim 1, characterized in that in the top and bottom surfaces there is provided per phase one opening (for example 17, 23), which openings have a common mid-axis (for example 34, 35).

6. Cast housing according to one of Claims 1 to 5, characterized in that the opening (22, 23, 24) provided in the bottom surface are in each case closed by a gastight wall cast during housing production.

7. Cast housing according to one of Claims 1 to 6, characterized in that the cover (48) contains a transparent plate of electrically insulating material, through which a grounded contact (51) recessed into the plate is led out from the interior of the cast housing (1).

8. Cast housing according to one of Claims 1 to 6, characterized in that the cover is designed as a connection for filling the insulating gas.

9. Cast housing according to one of Claims 1 to 6, characterized in that the cover bears a measured-value transducer for a leakage detector or an arc protection device.

10. Cast housing according to one of Claims 1 to 6, characterized in that the cover bears a moisture absorber.

## Revendications

1. Boîtier moulé (1) essentiellement quadrangulaire et rempli d'un gaz isolant pour une installation de commutation d'une tension moyenne polyphasée, destiné à porter des composants électroconducteurs de l'installation comme un interrupteur de puissance ou de charge (36), une barre omnibus (40), un sectionneur (39) et un interrupteur de mise à la terre (51), et des traversées (p. ex. 49), lequel boîtier moulé présente au moins dans une paroi antérieure et dans une paroi postérieure ainsi que dans une face inférieure et dans une face supérieure des ouvertures (p. ex. 2) obturables et limitées par une bride (p. ex. 3), caractérisé en ce que le boîtier (1) présente à la fois dans la paroi antérieure et dans les deux parois latérales diamétralement opposées et adjacentes à la paroi antérieure une grande ouverture (2, 28, 29) limitée par une bride (3, 30, 31) et à la fois dans la paroi postérieure ainsi que dans la face supérieure et dans la face inférieure, par phase, au moins une de quatre ouvertures relativement petites (p. ex. 5, 8, 17, 23), lesquelles sont chacune limitées par une de quatre brides correspondantes (p. ex. 11, 14, 20, 26), et dont les axes centraux (p. ex. 32, 33, 34, 35) menés à travers ces ouvertures (p. ex. 5, 6, 17, 23) sont situés dans un plan, en ce que les raccords (36, 37) des phases de l'interrupteur de puissance ou de charge (38) peuvent être introduits à l'intérieur du boîtier moulé (1) à travers l'ouverture (2) ménagée dans la paroi antérieure, en ce que les conducteurs de phase de la barre omnibus (40) peuvent chacun être introduits à travers les ouvertures (28, 29) ménagées dans les parois latérales, et en ce que, soit à travers chacune (p. ex. 5) des autres ouvertures (p. ex. 5, 8, 17, 23) on peut mener un conducteur de traversée, orienté suivant l'axe un autre composant électro-conducteur de l'installation, soit cette ouverture peut être fermée par un couvercle soit elle est fermée par une paroi moulée.

2. Boîtier moulé suivant la revendication 1, caractérisé en ce que, dans la paroi postérieure, il est prévu, par phase, deux ouvertures (p. ex. 5, 8) superposées, avec des axes centraux (p. ex. 32, 33) parallèles l'un à l'autre orientés vers l'intérieur du boîtier moulé (1), axes suivant lesquels, lorsqu'un interrupteur de puissance ou de charge (38) est mis en place, sont dirigés des premiers organes de couplage se trouvant aux raccords (36, 37) de l'interrupteur de puissance ou de charge (38).

3. Boîtier moulé suivant la revendication 2, caractérisé en ce que, sur la face intérieure de la paroi postérieure entre les deux ouvertures (p. ex. 5, 8) de chaque phase, il est prévu une cloison (52) orientée essentiellement parallèlement aux axes centraux (p. ex. 32, 33) de ces ouvertures (p. ex. 5, 8), laquelle cloison, après le montage d'un interrupteur de puissance ou de charge (38), partage le boîtier moulé en deux chambres séparées l'une de l'autre.

4. Boîtier moulé suivant la revendication 1, caractérisé en ce que, dans la face inférieure, il est prévu une ouverture (p. ex. 23) avec un axe central (p. ex. 35) orienté vers l'intérieur du boîtier moulé (1), axe suivant lequel, lorsqu'un interrupteur de puissance ou de charge (38) est mis en place, est dirigé un second organe de couplage qui est posé sur un raccord (p. ex. 36) de l'interrupteur de puissance ou de charge (38), qui est tourné vers la face intérieure.

5. Boîtier moulé suivant la revendication 1, caractérisé en ce que, dans la face supérieure et dans la face inférieure, il est prévu une ouverture (p. ex. 17, 23) par phase, lesquelles ouvertures présentent un axe central commun (p. ex. 34, 35).

6. Boîtier moulé suivant l'une ou l'autre des revendications 1 à 5, caractérisé en ce que les ouvertures (22, 23, 24) prévues dans la face inférieure sont chacune fermées par une paroi étanche au gaz moulée lors de la fabrication du boîtier.

7. Boîtier moulé suivant l'une ou l'autre des revendications 1 à 6, caractérisé en ce que le couvercle (48) comporte une plaque transparente en matériau électriquement isolant, à travers laquelle un contact (51) de mise à la terre inséré dans la plaque est mené hors de l'intérieur du boîtier moulé (1).

8. Boîtier moulé suivant l'une ou l'autre des revendications 1 à 6, caractérisé en ce que le couvercle est constitué de façon à former un raccord pour l'introduction du gaz isolant.

9. Boîtier moulé suivant l'une ou l'autre des revendications 1 à 6, caractérisé en ce que le couvercle porte un capteur de mesure pour un appareil de surveillance de l'étanchéité ou un dispositif de protection contre l'arc électrique.

10. Boîtier moulé suivant l'une ou l'autre des revendications 1 à 6, caractérisé en ce que le couvercle porte un moyen d'absorption de l'humidité.

FIG.1

FIG. 2

FIG.3

FIG.4

FIG.5